# EUROPEAN PATENT APPLICATION

(11) **EP 4 670 831 A1**
(43) Date of publication of application: **31.12.2025**
(21) Application number: 25182126.0
(22) Date of filing: 11.06.2025
(51) Int. Cl.: B01J 6/00, B01J 19/28, B01J 8/10

(54) **KILN WITH ROTARY TUBE REACTOR FOR HYDROGEN TREATMENT AND ASSOCIATED METHODS**

(30) Priority: 24.06.2024 DE 102024117779
(71) Applicant: Skeleton Technologies GmbH, 04420 Markranstädt (DE)
(72) Inventor: Markarian, Ohannes, 04109 Leipzig (DE); Winzer, Sebastian, 04275 Leipzig (DE)
(74) Representative: KASTEL Patentanwälte PartG mbB

(57) **Abstract**

In order to improve hydrogen treatment of carbide-derived carbon particles after a halogenation reaction, the invention proposes a kiln (10) for hydrogen treatment of carbon particles, the kiln (10) comprising a work tube (12) that includes a reactor chamber (52), wherein the work tube (12) is rotatably supported to so as to be rotated about its longitudinal axis or wherein the work tube (12) is fixedly supported and includes transport system (26) that is configured to transport solid particles along its longitudinal axis; and a heating system (24) configured for heating a circumferential portion of the work tube (12) in order to heat the reactor chamber (52), wherein the reactor chamber (52) includes an inward facing surface that is furnished with a refractory material containing carbon; and/or wherein the kiln (10) comprises a hot-filtration system (30) that is configured for separating solid reactants (28) from hot gas emerging from the reactor chamber (52).

## Description

The invention relates to a kiln. The invention further relates to a method for hydrogen treatment and/or purification with the kiln and a manufacturing method using the kiln.

The terms used herein for macropores, mesopores and micropores are based on the classification adopted by the IUPAC, according to which macropores have a pore diameter greater than 50 nm, mesopores have a pore diameter between 2 nm and 50 nm and micropores have a pore diameter less than 2 nm. Also, as used herein, the terms microporous, mesoporous, or macroporous mean that the appropriate type of pores are present. This does not preclude the presence of other types of pores, e.g., a microporous material is not limited to having only micropores but may also contain mesopores and/or macropores.

The particle sizes used here are measured by laser diffraction in a liquid medium. Auxiliaries such as surfactants can be used. The measurement is evaluated according to Mie and/or Fraunhofer. Typically, fraction X of particles with a size smaller than S is referred to as DX with size S, e.g. D90 20 µm means that 90% of the particles have a size smaller than 20 µm. This terminology is not limited to particle sizes and can also be used for other (size) distributions.

The specific surface area, i.e. the surface area per unit weight, refers to values obtained by the physisorption of nitrogen in conjunction with the Brunauer-Emmet-Teller (BET) and Rouquerol evaluation methods as described in the IUPAC Technical Report: "Physisorption of gases, with special reference to the evaluation of surface area and pore size distribution (IUPAC Technical Report)" by Thommes et al., PureAppl. Chem. 2015; 87(9-10): 1051-1069. This disclosure is incorporated herein by reference.

For the sake of brevity, the specific surface area thus determined is also referred to as the BET (nitrogen) surface area.

EP 4 304 982 B1 discloses a method for manufacturing microporous carbon material from metal carbide.

The microporous carbon material obtained in this process is a fundamental component for supercapacitors (also called ultracapacitors) and plays an important role in improving charge/discharge capabilities, as disclosed in WO 2023 117 170 A2, WO 2023 117 488 A1, WO 2023 117 490 A1, WO 2023 117 491 A1, and WO 2023 117 492 A1.

Especially in energy storage as well as in filtering applications, the high specific surface area of this class of material is of interest. Carbide-derived carbons (CDCs) represent a class of high-surface area microporous carbons with narrow poresize distribution and high surface-to-volume ratio. Commonly, the CDCs are manufactured by chemically stripping metal- or metalloid carbides from their metal or metalloid contents by halogenation at high temperatures, for example in the range of 200°C to 1200°C as a temperature of reaction zone, leaving metal- or metalloid chlorides and the microporous carbon as the product.

CDCs can be synthesized from many different precursors hereinafter referred to as carbides: binary carbides (such as TiC, SiC, Al₄C₃, Mo₂C, SiC, B₄C, ZrC, NbC, etc)., or similar compounds with oxygen (such as oxycarbides, MCₓO_{y}) or nitrogen (such as carbonitrides, MCₓN_{y}), or tertiary carbides (such as M1ₓM2_{y}C), or the mixtures of those, where M, M1, and M2 stand for a metal or metalloid. Commonly, the precursor is in the form of powder with variable particle size distributions, but also the agglomerates or pellets or film of carbide can be used. From the point of view of structural order, the precursor carbide may be monolithic crystal or polycrystalline or porous biomorphic carbide or of any other morphology.

A typical reaction type uses halogen gas in the form of chlorine. According to the massbalance of chlorination reaction, the theoretical yield of carbide-derived carbon (CDC) from different carbides may range from about 6 wt% in the case of molybdenum carbide to almost 30 wt% for silicon carbide.

In general, the resulting CDC needs to be purified after the halogenation reaction, as halogen atoms and other impurites may adsorb to the carbon material. Furthermore, it is possible to generate dangling bonds, which can act as an adsorption site for impurities.

It is the obejct of the invention to improve the manufacturing process of CDC, preferably with a focus on purification after halogenation.

The object is achieved by the subject-matter of the independent claims. Preferred embodiments are subject-matter of the dependent claims.

The invention provides a kiln for hydrogen treatment of carbon particles, the kiln comprising a work tube that is supported to so as to be rotated about its longitudinal axis and that includes a reactor chamber; and an indirect or direct heating system configured for heating a circumferential portion of the work tube in order to heat the reactor chamber.

In one embodiment the reactor chamber includes an inward facing surface that is furnished with a refractory material containing carbon. In an alternative or additional embodiment the kiln comprises a hot-filtration system that is configured for separating solid reactants from hot gas emerging from the reactor chamber.

CDC particles coming directly out of halogenation or after comminution typically impurities on their surfaces in an amount that makes them hardly usable for electrode manufacturing of supercapacitors. Typical impurities arehalogens, such as chlorine, metal atoms bonded to the carbon, such as aluminium (Al), iron (Fe), magnesium (Mg), and the metal of the metal carbide, e.g., silicon (Si). Another impurity are dangling bonds. While not an issue in and of themselves, dangling bonds provide adsorption sites for other atoms that may affect the performance of the material as an active electrode material. To remove the impurities, the particles can be exposed to a hydrogen atmosphere within the reactor chamber under a hydrogen atomsphere. In order to avoid undesired reactions, the refractory material is inert with regards to the CDC particles.

The reactor may also contain a hot-filtration system that separates the gaseous components, mainly hydrogen gas and compounds formed during the hydrogen treatment, e.g., metal and metalloid hydrides and halides, from the CDC particles. The CDC particles are kept within the reactor chamber and under reaction conditions to perform hydrogen treatment.

Preferably, the refractory material contains or is a carbon-carbon composite, preferably carbon fiber reinforced carbon. Preferably, the refractory material contains metals only as impurities. Preferably, the refractory contains a metalloid, e.g. silicon. Preferably, the refractory material contains oxygen only as impurity. With these materials it is possible to reduce the risk of reactions between the solid reactants and the reactor chamber wall.

Preferably, the kiln comprises a transport system having a transport tube configured for feeding or removing solid reactant from the reactor chamber, wherein preferably the transport tube protrudes into the reactor chamber. Preferably, the transport system includes a transport member that is disposed within the transport tube for moving particulate material from or to the reactor chamber. Preferably, the transport member is a transport screw. Preferably, the transport system includes a vibrational conveyor for transporting solid reactants into the reactor chamber, e.g., via the transport tube. Preferably, the transport tube is fixedly supported and the work tube is rotatably supported relative to the transport tube. While the reactor can be manually loaded or unloaded, a transport system allows automated loading and unloading.

Preferably, the hot-filtration system comprises a filter element support and a plurality of filter elements for separating hot gas from solid reactants. Preferably, the filter element support fixedly supports the filter elements and the work tube is movable relative to the filter elements. The filter elements are porous and typically have a pore size that is matched to the solid reactant particle size. For example, if the particles are D90 smaller than 20 µm, then the pores are small enough that at least the D90 particles cannot escape the reactor chamber.

Preferably, the filter element support is disposed such that the filter elements are supported to protrude into the reactor chamber. The filter elements may protrude into the reactor to keep any solid reactants under reaction conditions.

Preferably, the filter elements are arranged on the filter element support such that their respective centers align on a circular arc, preferably a semi-circle or a full circle, around the longitudinal axis of the work tube. This may prevent the filter elements from dipping into the solid reactants during operation.

Preferably, the filter element support is disposed on the transport system and fluidly connected with the transport tube. With this separation, the filter elements are not directly exposed to the heat of the hydrogen treatment and may last longer. The arrangement is preferably chosen such that solid reactants removed from the filter elements gets fed back into the reactor chamber by the transport system.

Preferably, each filter element has a circumferential wall forming a cavity with an open end portion and a closed end portion. Preferably, the open end portion is open towards the environment and the closed end portion faces a gas flow emerging from the reactor chamber. The half-hollow geometry allows for a sufficient gas flow, even if substantial amounts of solid reactants are attached to the filter elements.

Preferably, the kiln comprises a gas pulse system that is configured for delivering a gas pulse into the hot-filtration system to at least partially remove solid reactants from the hot-filtration system and at least partially feed the removed solid reactants back into the reactor chamber. The gas pulse, preferably using inert gas, removes the solid reactants from the filters and allows them to get back into the reactor chamber.

Preferably, the gas pulse comprises a purge gas that does not react with at least carbon. Preferably, the purge gas is chosen from a group consisting of helium, neon, argon, krypton and xenon. Preferably, the purge gas is argon.

Preferably, the gas pulse system is configured to deliver the gas pulse into the filter elements, preferably the cavity, to remove solid reactants from the filter elements. The gas pulse can be delivered into the hollow part of the filter in order to improve the removal from the circumferential wall and closed end portion.

Preferably, the kiln comprises a controller that is configured to control the gas pulse system to deliver the gas pulses to the filter elements one-by-one in sequence. A one-by-one sequence keeps the disturbance of the reactor chamber and the reaction conditions to a minimum.

The invention provides a method for hydrogen treatment of carbide derived carbon with a kiln according to any of the preceding claims, wherein the reactor chamber gets loaded with carbide derived carbon particles that are maintained under an atmosphere of hydrogen gas or of a gas mixture containing at least 30% by volume of hydrogen based on the total volume of the gas mixture at a temperature of 500 °C to 1300 °C, preferably of 800 °C to 1000 °C.

Preferably, a gas pulse system delivers gas pulses to at least one filter element. Preferably, the gas pulses are delivered to the filter elements one-by-one in sequence.

Preferably, the carbide derived carbon particles are obtained from a metal carbide material that is chosen from a group consisting of vanadium carbide material, titanium carbide material, molybdenum carbide material, silicon carbide material, tungsten carbide material, tantalum carbide material, and niobium carbide material.

Preferably, the hydrogen treatment is performed for a duration of from including 0.01 hours to including 10 hours, preferably 2 hours to 4 hours, in batch mode , semi-batch mode or continuous mode.

The invention provides a method for manufacturing microporous carbon material, the method comprising the steps of reacting a granular metal carbide material by means of a halogen gas or a gas mixture containing a halogen gas at a temperature of 500 °C up to and including 1300 °C; optionally, maintaining the previously obtained product at a temperature of 150°C to at most 250°C and preferably under vacuum at a pressure of 1 mbar up to and including 300 mbar for degassing; performing a hydrogen treatment.

Preferably, the halogen gas is supplied in an amount of 100% up to and including 110% of the stoichiometrically required amount.

Preferably, the vacuum is from including 5 mbar to including 200 mbar, preferably from including 5 mbar to including 80 mbar, more preferably from including 8 mbar to 15 mbar, more preferably 10 mbar.

Preferably, the halogenation is carried out for a duration of from including 8 hours to including 13 hours.

Preferably, the degassing is performed for a duration of from including 12 hours to including 30 hours.

Preferably, the hydrogen treatment is performed for a duration of from including 2 hours to including 4 hours.

CDC recovery rate is relevant for the overall yield of the process, while at the same time a gas flow of metal and halogen hydrides leaving the reactor is cleared of solid components (in this case the CDC and/or partially reacted carbide and/or pure carbides), as having any solids within the gas flow may lead to complications in downflow units (such as condensers, filters, pumps, etc.). It is also relevant to keep uniform conditions for the solids, meaning that changes and/or fluctuations within the temperature of solids usually result in a non-uniform characteristic of the CDC, which should be avoided. In addition, the solids (partially or fully converted CDC) should be kept from getting into contact with any surface/material that can be a source of contaminants and/or provide possible catalytic capabilities for graphitization of CDC, e.g., metal surfaces.

In some embodiments a horizontal or slightly inclined work tube is tailored for the hydrogen treatment of carbide derived carbon (CDC). It features a design where the outer structure may comprise a tube within a metal drum or a single tube, heated externally or internally. To prevent metal contact with activated carbon, the inner tube is preferably constructed of carbon fiber reinforced carbon (CFC) or compatible material.

Multiple porous filters can be strategically placed at one end of the reactor chamber to prevent CDC particles from leaving with the off-gas stream. These filters, preferably made of porous carbon and/or ceramics, are capable of withstanding process conditions and facilitating gas-solid separation of carbon powder from the gas stream. Cleaning of accumulated CDC particles on the filters is achieved through pulsed delivery of argon or a similar gas compatible with the process.

The filter elements allow uniform exposure of the reactants to constant process conditions throughout the entire batch/semi-batch/continuous process. They are preferably distributed in a circular arrangement in the upper half of the furnace side to avoid contact with the powder bed and potential blockage, although placement elsewhere within the area is possible. Installation-wise, the filters are preferably mounted on the stationary face of the process equipment, supported by a structure on the feeding double tube.

Operationally, the kiln preferably functions as a gastight cylindrical vessel rotating slowly around its longitudinal axis. It is designed to withstand high temperatures, with heat treatment often conducted at temperatures from 500°C to 1300°C. The furnace can operate in a batch mode, with residence time easily controllable based on time or it can be operated in semi batch or continuous mode . Material loading may utilize a vibration conveyor, while unloading can be achieved by tilting the reactor and changing the rotation direction.

The purpose of the reactor is to purify CDC particles from impurities like chlorine and chlorides, as well as some residue metals. This purification process occurs in a high-temperature hydrogen environment, where hydrogen serves as both a reactant and a cleaning agent. The resulting gas can exit the reactor by passing through the filters, which hold back entrained particles and form a filter cake on the surface. This cake can be removed using an inert back pulsing system, ensuring continuous and efficient operation of the reactor.

Embodiments of the invention are described in more detail with reference to the accompanying schematic drawings that are listed below
- Fig. 1: depicts an embodiment of a kiln;
- Fig. 2: depicts the kiln during a gas pulse;
- Fig. 3: depicts the kiln during unloading;
- Fig. 4: depicts a partial longitudinal-section of an embodiment of a work tube;
- Fig. 5: depicts a more longitudinal view of the work tube;
- Fig. 6: depicts a partial longitudinal-section of another embodiment of a work tube;
- Fig. 7: depicts a top view of a hot-filtration system; and
- Fig. 8: depicts another embodiment of a kiln.

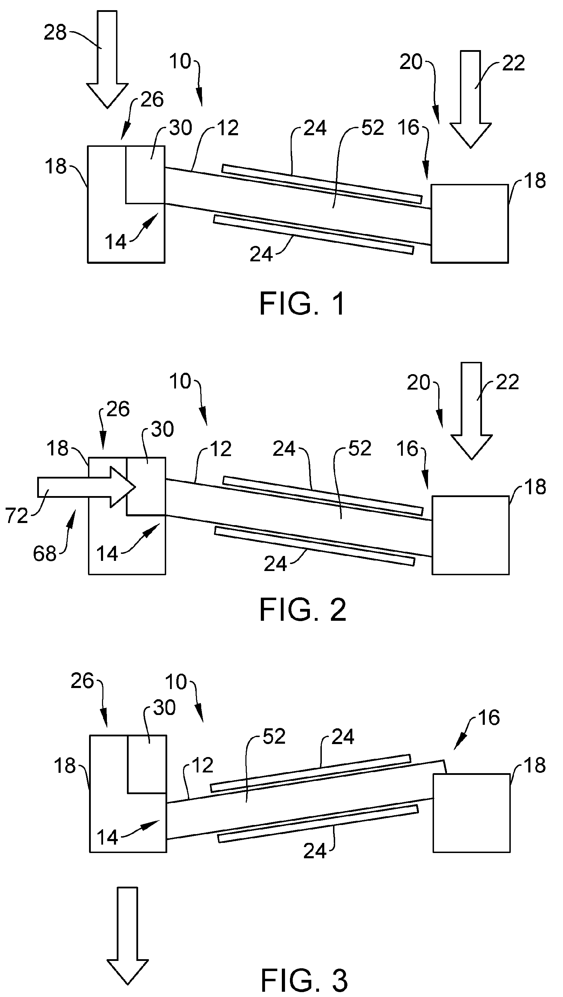

Referring to Fig. 1, a kiln 10 is depicted. The kiln 10 comprises a work tube 12. The work tube 12 comprises a first end portion 14 and a second end portion 16 that are spaced apart along a longitudinal direction of the work tube 12. The work tube 12 is preferably shaped as a cylinder. The work tube 12 is rotatably supported by a work tube support 18. The work tube support 18 may support the work tube 12 on the first end portion 14 and the second end portion 16. The work tube 12 is preferably supported to be slightly inclined. It is also preferred that the work tube 12 can be tilted to be horizontal and/or to be inclined in the opposite direction.

The kiln 10 comprises a reaction gas feeding system 20. The reaction gas feeding system 20 is configured to feed a reaction gas 22 (which may be a gas mixture) from a reservoir to the work tube 12. The reaction gas feeding system 20 may be disposed on one or both of the end portions 14, 16.

The kiln 10 comprises a heating system 24 that is arranged to heat the work tube 12 from the outside.

The kiln 10 comprises a transport system 26 for transporting solid reactant 28 to and/or from the work tube 12. The transport system 26 is arranged on one or both end portions 14, 16 of the work tube 12. Preferably, the gas feeding system 20 and the transport system 26 are arranged on opposite sides of the work tube 12.

The kiln 10 comprises a hot-filtration system 30. The hot-filtration system 30 is configured for separating gaseous and solid components emerging from the work tube 12. The solid components are caught by the hot-filtration system 30 on the side of the work tube 12.

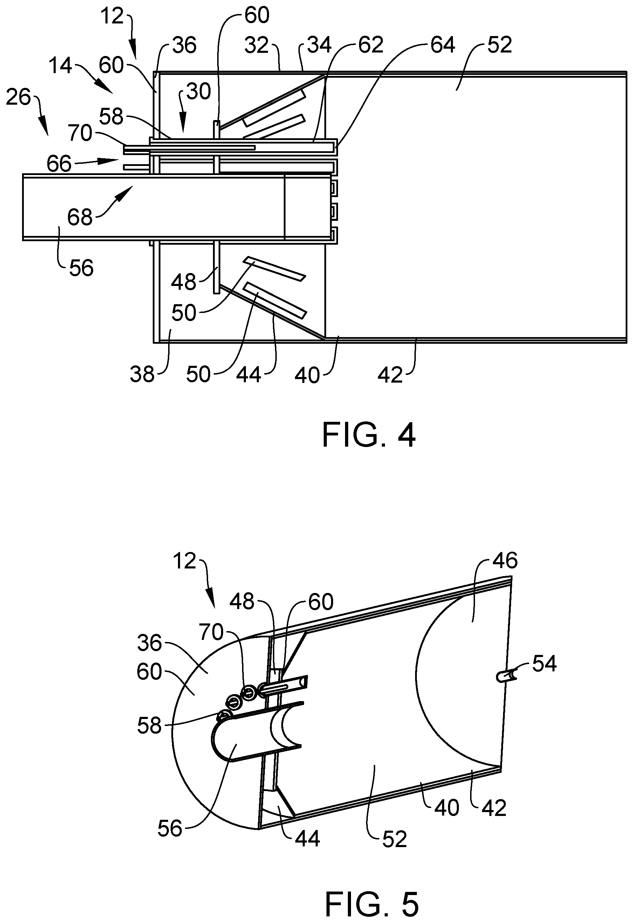

Referring to Fig. 4 and 5, an embodiment of the kiln 10 is described in more detail.

The work tube 12 is generally configured as a gas tight vessel such that gas exchange typically happens via predetermined interfaces like the reaction gas feeding system 20 or the hot-filtration system 30.

The work tube 12 comprises an outer tube 32. The outer tube 32 has a cylindrical shape. The outer tube 32 has an outer circumferential wall portion 34 and closed-off outer end faces 36. The outer circumferential wall portion 34 and the outer end faces 36 define an outer tube cavity 38. The outer tube 32 is preferably integrally formed as a single unitary member, which may be achieved by welding.

The work tube 12 comprises an inner tube 40. The inner tube 40 has a cylindrical shape. The inner tube 40 is formed so that it can be accomodated within the outer tube cavity 38. The inner tube 40 has an inner circumferential wall portion 42 that is in sliding contact with the outer circumferential wall portion 34.

The inner tube 40 has a tapered portion 44. The tapered portion 44 is integrally formed with the inner circumferential wall portion 42. The tapered portion 44 protrudes from the inner circumferential wall portion 42 along the longitudinal direction towards the end face 36. The tapered portion 44 is formed such that it has its larger diameter towards the inner circumferential wall portion 42 and its smaller diameter towards the end face 36.

The inner tube 40 has an end face 46. The end face 46 is integrally formed with the inner circumferential wall portion 42.

The inner tube 40 comprises a lid portion 48. The lid portion 48 is attached to the tapered portion 44. The lid portion 48 may comprise a plurality of ribs 50 that extend along the tapered circumferential wall.

The inner tube 40, specifically the inner circumferential wall portion 42, the tapered portion 44, the end face 46, and the lid portion 48, define(s) a reactor chamber 52.

The inner tube 40 is made of a refractory material for the most part. The refractory material is a carbon-carbon composite, preferably carbon fiber reinforced carbon. This material includes carbon fibers that are embedded in a graphite matrix. At least the inner circumferential wall portion 42, the tapered portion 44, and the end face 46 are made of the refractory material. The lid portion 48 is typically made of metal. Optionally, the lid portion 48 may be made of refractory material instead. The lid portion 48 is separate from the other parts of the inner tube 40.

The outer tube 32 and the inner tube 40 include a gas feeding passage 54 that is fluidly connected to be fed by the reaction gas feeding system 20. The gas feeding passage 54 is preferably disposed on the second end portion 16. The gas feeding passage 54 may include a gas feeding tube.

The transport system 26 comprises a transport tube 56. The transport tube 56 passes through openings in the work tube 12 into the reactor chamber 52. The transport tube 56 passes through openings the outer end face 36 and the lid portion 48. The transport tube 56 is gas tight with the openings. The transport system 26 may include a vibrational conveyor that tranports particulate material by means of vibration.

The hot-filtration system 30 comprises a plurality of filter elements 58. Each filter element 58 is supported by the end face 36 and the lid portion 48. The end face 36 and the lid portion 48 form a filter element support 60. The filter element support 60 is configured such that the inner tube 40 may rotate relative to the filter element support 60 and/or the outer tube 32.

Each filter element 58 comprises a circumferential filter wall 62, a closed end portion 64 and an open end portion 66. The filter element 58 is made from a porous carbon material, preferably a carbon ceramic material.

The filter elements 58 are arrange such that their respective centers align on a semi-circular arc. The filter elements 58 are arranged in the upper half of the work tube 12 such that the filter elements 58 to not get into contact with solid reactants 28 by dipping into them. The filter elements 58 are configured to prevent the solid reactants 28 from leaving the reactor chamber 52. In other words, the pores have a size that prevents most of the solid reactants 28, e.g. 90 % or more of a given diameter from leaving the reactor chamber 52.

The filter elements 58 are also configured to maintain the atmosphere and process conditions within the reactor chamber 52. This is preferably done by the amount of pores. The filter elements 58 are configured such that there is sufficently low flow resistance for the off-gas flow, even when a lot of pores are clogged by carbon particles.

The kiln 10 comprises a gas pulse system 68. The gas pulse system 68 comprises a plurality of delivery tubes 70 that are preferably arranged within the filter elements 58, e.g., through the open end portion 66. Preferably, each filter element 58 has one delivery tube 70. The gas pulse system 68 is able to deliver a short gas pulse of an inert purge gas 72, such as argon. The gas pulse system 68 is typically controlled to deliver the gas pulses one at a time sequentially to all filter elements 58.

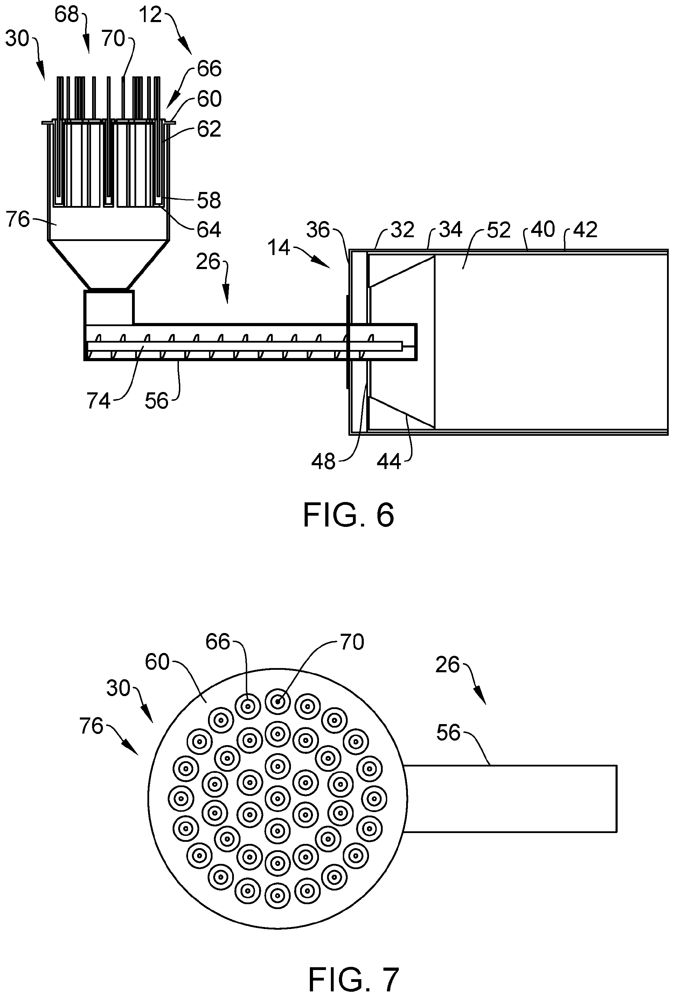

Referring to Fig. 6 and Fig. 7, another embodiment of the kiln 10 is described insofar as it differs from the previous embodiment.

In this embodiment, the transport system 26 is configured as a screw conveyor. The transport tube 56 includes a transport member 74 in the form of a screw.

The hot-filtration system 30 comprises a filter apparatus 76 that is fluidly connected to the transport system 26. The filter apparatus 76 has the filter element support 60 and the filter elements 58 are arranged such that they face the off-gas flow from the reactor chamber 52. The filter elements 58 are preferably arranged in a concentric pattern (Fig. 7).

Referring to Fig. 1 to Fig. 3, operation of the kiln 10 is described in more detail. As shown in Fig. 1, the reactor chamber 52 can be filled with solid reactant 28 in the form of CDC particles. The CDC particles have a size distribution with D90 of 20 µm. The reactor chamber 52 is heated by the heating system 24 to a temperature chosen from a range of 500 °C to 1300°C, preferably 800 °C to 1000°C. The work tube 12, specifically the inner tube 40 rotates slowly. The reaction gas feeding system 20 feeds reaction gas 22 in the form of hydrogen into the reactor chamber 52. The work tube 12 is slightly inclined such that the solid reactants 28 can be easily filled using the transport system 26.

Due to the gas flow within the reactor chamber 52 solid reactants 28 are blown towards the hot-filtration system 30, where they build up a filter cake on the filter elements 58. The filter elements 58 can keep the solid reactants 28 under the same process conditions as the bulk of the material.

As depicted in Fig. 2, from time to time, the gas pulse system 68 delivers gas pulses of purge gas 72 to the filter elements 58 to break off the filter cake. The solid reactants 28 can then fall back into the bulk material within the reactor chamber 52, sometimes assisted by the transport system 26. The gas pulses are delivered in sequence such that one filter element 58 after another is supplied with the gas pulse. This allows a stewed and uninterrupted flow of gas throughout the process.

As shown in Fig. 3, the kiln 10 can be emptied by tilting the work tube 12 in the other direction and rotating the reactor chamber 52.

With this process, the solid reactants 28, i.e. CDC particles, are purified from impurities like chlorine, chlorides, and certain metals and metalloids, e.g., Al, Fe, Mg, and Si. The purification takes place in the high-temperature hydrogen environment, as the hydrogen enters the reactor chamber 52 from one side and serves as a gaseous reactant or cleaning agent. It has easy contact with the particles' surface, can enter pores, react with impurities that may be located in there, and leave the pores. The resulting gas can leave the reactor chamber 52 by passing through the hot-filtration system 30.

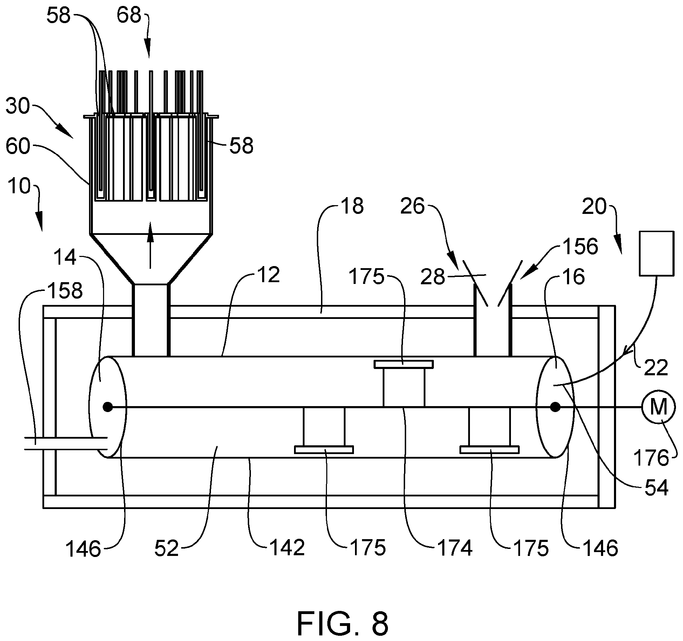

Referring to Fig. 8, another embodiment of a kiln 10 is described in more detail. The kiln 10 comprises a work tube 12. The work tube 12 comprises a first end portion 14 and a second end portion 16 that are spaced apart along a longitudinal direction of the work tube 12. The work tube 12 is preferably shaped as a cylinder. The work tube 12 is fixedly supported by a work tube support 18. The work tube support 18 supports the work tube 12 preferably on the first end portion 14 and the second end portion 16. The work tube 12 is preferably supported to be slightly inclined. It is also preferred that the work tube 12 can be tilted to be horizontal and/or to be inclined in the opposite direction.

The kiln 10 comprises a reaction gas feeding system 20. The reaction gas feeding system 20 is configured to feed a reaction gas (which may be a gas mixture) from a reservoir to the work tube 12. The reaction gas feeding system 20 is preferably disposed on the second end portion 16.

The kiln 10 comprises a heating system (not shown here for clarity) that is arranged to heat the work tube 12.

The kiln 10 comprises a transport system 26 for transporting solid reactant 28 to and/or from the work tube 12.

The kiln 10 comprises a hot-filtration system 30. The hot-filtration system 30 is configured for separating gaseous and solid components emerging from the work tube 12. The solid components are caught by the hot-filtration system 30 on the side of first end portion 14.

The work tube 12 is generally configured as a gas tight vessel such that gas exchange typically happens via predetermined interfaces like the reaction gas feeding system 20 or the hot-filtration system 30.

The work tube 12 is preferably integrally formed as a single unitary member. The work tube 12 has a cylindrical shape. The work tube 12 has circumferential wall portion 142 and two end faces 146 at the end portions 14, 16. The end faces 146 are integrally formed with the inner circumferential wall portion 142.

The work tube 12, specifically the circumferential wall portion 142 and the end face 146, define(s) a reactor chamber 52.

The work tube 12 is made of or lined with a refractory material. The refractory material is a carbon-carbon composite, preferably carbon fiber reinforced carbon. This material includes carbon fibers that are embedded in a graphite matrix. At least the circumferential wall portion 142 and the end faces 146 are made of the refractory material.

The work tube 12 includes a gas feeding passage 54 that is fluidly connected to be fed by the reaction gas feeding system 20. The gas feeding passage 54 is disposed on the second end portion 16. The gas feeding passage 54 may include a gas feeding tube.

The transport system 26 has a feeding inlet 156 that is arranged the second end portion 16 and feeds the solid reactant 28 to the work tube 12. The transport system 26 further has a solid outlet 158 that removes solid product from the work tube 12.

The transport system 26 comprises a feeding inlet 156. The feeding inlet 156 is supported by the work tube support 18 and may pass through openings therein to be connected to the reactor chamber 52. The transport system 26 may include a vibrational conveyor that tranports particulate material by means of vibration from the feeding inlet 156 into the reactor chamber 52.

The hot-filtration system 30 and the gas pulse system 68 are similar to the previous embodiments of Fig. 6 and Fig. 7 so they are not described again in detail for the sake of brevity. The hot-filtration system 30 is modified in that it is separate from the transport system 26 and directly fluidly connected to the reactor chamber 52. The hot-filtration system 30 is supported by the work tube support 18.

As shown in Fig. 8, the transport system 26 comprises a transport member 174 that is arranged within the reactor chamber 52. The transport member 174 may includes a plurality of paddles 175. The paddles 175 may be parallel to the longitudinal axis of the work tube 12 or be curved to facilitate transport of solid particles along the longitudinal axis. The transport member 174 is rotatably supported by the work tube 12, preferably by the end faces 146. The transport member 174 is driven by a motor 176.

Referring to Fig. 8, operation of the kiln 10 is described in more detail. As shown in Fig. 8, the reactor chamber 52 can be filled with solid reactant 28 in the form of CDC particles through the feeding inlet 156. The CDC particles have a size distribution with D90 of 20 µm. The reactor chamber 52 is heated by the heating system 24 to a temperature chosen from a range of 500 °C to 1300°C, preferably 800 °C to 1000°C. The transport member 174 rotates slowly. The reaction gas feeding system 20 feeds reaction gas 22 in the form of hydrogen through the gas feeding passage 54 into the reactor chamber 52. The work tube 12 may be slightly inclined such that the solid reactants 28 are transported by the rotating transport member 174 from the feeding inlet 156 through the reactor chamber 52 towards the solid outlet 158, where they can exit. With this a continuous operation is possible.

Regarding the filtering the kiln 10 workes identically to the previously described embodiments.

### List of reference signs:

10 kiln
12 work tube
14 first end portion
16 second end portion
18 work tube support
20 reaction gas feeding system
22 reaction gas
24 heating system
26 transport system
28 solid reactant
30 hot-filtration system
32 outer tube
34 outer circumferential wall portion
36 end face
38 outer tube cavity
40 inner tube
42 inner circumferential wall portion
44 tapered portion
46 end face
48 lid portion
50 rib
52 reactor chamber
54 gas feeding passage
56 transport tube
58 filter element
60 filter element support
62 circumferential filter wall
64 closed end portion
66 open end portion
68 gas pulse system
70 delivery tube
72 purge gas
74 transport member
76 filter apparatus
142 circumferential wall portion
146 end face
156 feeding inlet
158 solid outlet
174 transport member
175 paddle
176 motor

## Claims

1. A kiln (10) for hydrogen treatment of carbon particles, the kiln (10) comprising:
- a work tube (12) that includes a reactor chamber (52), wherein the work tube (12) is rotatably supported to so as to be rotated about its longitudinal axis or wherein the work tube (12) is fixedly supported and includes transport system (26) that is configured to transport solid particles along its longitudinal axis; and
- a heating system (24) configured for heating a circumferential portion of the work tube (12) in order to heat the reactor chamber (52),
wherein the reactor chamber (52) includes an inward facing surface that is furnished with a refractory material containing carbon; and/or
wherein the kiln (10) comprises a hot-filtration system (30) that is configured for separating solid reactants (28) from hot gas emerging from the reactor chamber (52).

2. The kiln (10) of claim 1, wherein the refractory material
- contains or is a carbon-carbon composite, preferably carbon fiber reinforced carbon; and/or
- contains metals only as impurities; and/or
- contains a metalloid, preferably Si
- contains oxygen only as impurity.

3. The kilnof any of the preceding claims, further comprising a transport system (26) having a transport tube (56) configured for feeding or removing solid reactant (28) from the reactor chamber (52), wherein preferably the transport tube (56) protrudes into the reactor chamber (52); or
wherein the transport system (26) includes a transport member (74, 174) that is arranged to rotate within the reactor chamber (52) to transport solid particlies along the longitudinal axis.

4. The kiln (10) of claim 3, wherein the transport tube (56) is fixedly supported and the work tube (12) is rotatably supported relative to the transport tube (56).

5. The kiln (10) of any of the preceding claims, wherein the hot-filtration system (30) comprises a filter element support (60) and a plurality of filter elements (58) for separating hot gas from solid reactants (28), wherein the filter element support (60) fixedly supports the filter elements (58) and the work tube (12) is movable relative to the filter elements (58).

6. The kiln (10) of claim 5, wherein the filter element support (60) is disposed such that the filter elements (58) are supported to protrude into the reactor chamber (52).

7. The kiln (10) of any of the claims 5 or 6, wherein the filter elements (58) are arranged on the filter element support (60) such that their respective centers align on a circular arc, preferably a semi-circle or a full circle, around the longitudinal axis of the work tube (12).

8. The kiln (10) of claim 5, wherein the filter element support (60) is disposed on the transport system (26) and fluidly connected with the transport tube (56).

9. The kiln (10) of any of the claims 5 to 8, wherein each filter element (58) has a circumferential wall forming a cavity with an open end portion (66) and a closed end portion (64), wherein the open end portion (66) is open towards the environment and the closed end portion (64) faces a gas flow emerging from the reactor chamber (52).

10. The kiln (10) further comprising a gas pulse system (68) that is configured for delivering a gas pulse into the hot-filtration system (30) to at least partially remove solid reactants (28) from the hot-filtration system (30) and at least partially feed the removed solid reactants (28) back into the reactor chamber (52).

11. The kiln (10) of claim 10, wherein the gas pulse system (68) is configured to deliver the gas pulse into the filter elements (58), preferably the cavity, to remove solid reactants (28) from the filter elements (58).

12. The kiln (10) of claim 11, further comprising a controller that is configured to control the gas pulse system (68) to deliver the gas pulses to the filter elements (58) one-by-one in sequence.

13. A method for hydrogen treatment of carbide derived carbon with a kiln (10) according to any of the preceding claims, wherein the reactor chamber (52) gets loaded with carbide derived carbon particles that are maintained under an atmosphere of hydrogen gas or of a gas mixture containing at least 30% by volume of hydrogen based on the total volume of the gas mixture at a temperature of 500 °C to 1300 °C, preferably of 800 °C to 1000 °C.

14. The method of claim 13, wherein a gas pulse system (68) delivers gas pulses to at least one filter element (58), and, if more than one filter element (58) is present, the gas pulses are delivered to the filter elements (58) one-by-one in sequence.

15. A method for manufacturing microporous carbon material, the method comprising the steps of:
a) reacting a granular metal carbide material by means of a halogen gas or a gas mixture containing a halogen gas at a temperature of 500 °C up to and including 1300 °C;
b) optionally, maintaining the product obtained in step a) at a temperature of 150 °C to at most 250 °C;
c) performing a hydrogen treatment of claim 13 or 14.
